# EUROPÄISCHE PATENTSCHRIFT

(11) **EP 3 793 885 B1**
(45) Veröffentlichungstag und Bekanntmachung des Hinweises auf die Patenterteilung: **22.03.2023**
(21) Anmeldenummer: 19736652.9
(22) Anmeldetag: 02.07.2019
(51) Int. Cl.: B62D 11/00

(54) **KETTENFAHRZEUG**
TRACKED VEHICLE
VÉHICULE À CHENILLES

(30) Priorität: 03.07.2018 DE 102018116077
(43) Veröffentlichungstag der Anmeldung: 24.03.2021
(73) Patentinhaber: Liebherr-Electronics and Drives GmbH, 88131 Lindau (DE)
(72) Erfinder: PAAL, Martin, 88400 Biberach/Riss (DE); GRANER, Klaus, 88400 Biberach/Riss (DE)
(74) Vertreter: Thoma, Michael
(86) Internationale Anmeldenummer: PCT/EP2019/067693
(87) Internationale Veröffentlichungsnummer: WO 2020/007835

(56) Entgegenhaltungen:
- EP-A1- 2 450 214
- DE-A1-102012 216 661

## Beschreibung

Die vorliegende Erfindung betrifft ein Kettenfahrzeug mit zumindest zwei antreibbaren Raupenketten, einer Sensoreinrichtung zum Erfassen der Ist-Geschwindigkeit jeder der zumindest zwei Raupenketten und einer Steuervorrichtung zum Steuern der Antriebsgeschwindigkeiten der zumindest zwei Raupenketten, wobei die Steuervorrichtung ein Kurvensteuermodul zum Einstellen unterschiedlicher Antriebsgeschwindigkeiten für die zumindest zwei Raupenketten für Kurvenfahrten in Abhängigkeit eines Lenksignals eines Lenksignalgebers aufweist.

Solche Kettenfahrzeuge sind in verschiedenen Ausführungen bekannt und können beispielsweise Baumaschinen wie Planierraupen oder Raupenbagger sein, oder auch eine Pistenraupe bilden, wie sie in Skigebieten eingesetzt wird. Dabei werden die Raupenketten für Kurvenfahrten unterschiedlich schnell angetrieben, um zwischen rechten und linken Raupenketten eine Geschwindigkeitsdifferenz zu erzeugen, die dann zu einer Kurvenfahrt führt. In der Regel werden hierbei beide Raupenketten immer noch in dieselbe Richtung, das heißt entweder vorwärts oder rückwärts angetrieben, wobei es grundsätzlich aber auch bekannt ist, eine Raupenkette vorwärts und die andere rückwärts anzutreiben, um sozusagen im Stand zu drehen.

Beispielsweise zeigt die Schrift EP 2 450 214 A1, welche die Merkmale des Oberbegriffs des unabhängigen Anspruchs 1 offenbart, ein Kettenfahrzeug in Form einer Pistenraupe mit zwei Raupenketten, die jeweils von einem eigenen Antrieb antreibbar sind, wobei für die Raupenketten unterschiedliche Antriebsgeschwindigkeiten vorgebbar sind, um Kurven fahren zu können.

Dabei können die Raupenketten grundsätzlich auf verschiedene Weisen angetrieben werden. Einerseits ist es bekannt, einen zentralen Antriebsmotor zu verwenden, dessen Antriebsbewegung über ein Getriebe sowohl auf die rechte Raupenkette als auch auf die linke Raupenkette übertragen wird. Um trotz zentralem Antriebsmotor die Kettenräder der rechten und linken Seite unterschiedlich schnell antreiben zu können, kann ein sogenanntes Überlagerungs-Lenkgetriebe Verwendung finden, das im Wesentlichen zwei Planetengetriebe umfasst, deren Sonnenräder mit gleicher Geschwindigkeit von der zentralen Antriebswelle des zentralen Antriebsmotors her angetrieben werden und deren Planetenträger jeweils mit dem Turas der linken bzw. rechten Raupenkette verbunden sind. Um die Drehgeschwindigkeit der beiden Planetenträger gegeneinander variieren zu können, können die Hohlräder von einem Lenkantrieb her beispielsweise über eine gegenläufige Getriebestufe zueinander gegenläufig angetrieben werden. Je nach Ausbildung kann die Anbindung der zentralen Antriebswelle, der mit den Turas verbundenen Antriebswellen und des Lenkantriebs auch anders getroffen sein, beispielsweise dergestalt, dass die zentrale Abtriebswelle des zentralen Antriebsmotors mit den beiden Hohlrädern gekoppelt wird und das Lenkgetriebe die Sonnenräder zueinander gegenläufig verdreht.

Andererseits werden in jüngerer Zeit auch Einzelantriebe für die Raupenketten verwendet, bei denen jede Raupenkette ihren eigenen Antriebsmotor besitzt, wobei jeder Antriebsmotor individuell steuerbar sein bzw. die beiden Antriebsmotoren mit unterschiedlichen Antriebsgeschwindigkeiten betrieben werden können, um die Raupenketten für Kurvenfahrten mit unterschiedlichen Geschwindigkeiten antreiben zu können.

Solche Kettenfahrzeuge sind beispielsweise in den Schriften DE 10 2012 212 248 A1 und DE 10 2012 216 661 A1, welche die Merkmale des Oberbegriffs des unabhängigen Anspruchs 7 offenbart, gezeigt.

Bei solchen Einzelantrieben kann es zu Problemen mit der Lenkung kommen, wenn einer der beiden Antriebe ausfällt. Auch wenn der andere Antrieb relativ rasch ausgeschaltet werden kann, kann der von der Lenkung vorgegebene Kurvenradius nicht mehr eingehalten werden, da das Fahrzeug dann unangetrieben im Wesentlichen geradeaus auslaufen würde. Kann der noch funktionierende Antrieb indes nicht schnell genug ausgeschaltet werden, kann es zu gänzlich unkontrolliertem Kurvenverhalten kommen.

Ähnliche Probleme können sich bei dem zuvor geschilderten Zentralantrieb ergeben. Fällt beispielsweise der Lenkungsantrieb aus, sodass die Hohlräder der beiden Planetengetriebe des Überlagerungs-Lenkungsgetriebes nicht mehr gegenläufig angetrieben werden, kann das Kettenfahrzeug im Wesentlichen nur noch geradeaus fahren. Fällt der Zentralantrieb aus, hängt die Reaktion von der Anbindung des Lenkungsantriebes ab. Ist der Lenkungsantrieb vom Zentralantrieb her gespeist bzw. Energie versorgt, fällt auch der Lenkungsantrieb aus und das Kettenfahrzeug kann nur noch geradeaus auslaufen. Besitzt der Lenkungsantrieb indes eine eigene Energieversorgung, kann es zu einem unkontrollierten Drehen des Kettenfahrzeugs kommen, da die Hohlräder weiterhin gegenläufig angetrieben werden.

Der vorliegenden Erfindung liegt hiervon ausgehend die Aufgabe zugrunde, ein verbessertes Kettenfahrzeug der genannten Art zu schaffen, das Nachteile der Standes der Technik vermeidet und letzteren in vorteilhafter Weise weiterbildet. Insbesondere soll ein stabiles Lenkverhalten auch im Fehlerfall erreicht werden, wenn ein Antrieb ausfällt.

Erfindungsgemäß wird die genannte Aufgabe durch ein Kettenfahrzeug gemäß Anspruch 1 sowie ein Kettenfahrzeug gemäß Anspruch 7 gelöst. Bevorzugte Ausgestaltungen der Erfindung sind Gegenstand der abhängigen Ansprüche.

Es wird also gemäß einem ersten Aspekt vorgeschlagen, dass bei einem Einzelantrieb der zumindest zwei Raupenketten bei Ausfall eines Antriebsmotors der noch funktionsfähige andere Antriebsmotor nicht mehr der für den Normalbetrieb, das heißt den fehlerfreien Betrieb vorgegebenen Solldrehzahl folgt, sondern der sensorisch erfassten Ketten- oder Antriebsstranggeschwindigkeit des ausgefallenen Antriebs unter Berücksichtigung des Lenksignals und des daraus resultierenden, für die ggf. komandierte Kurve notwendigen Geschwindigkeitsunterschieds zwischen linker und rechter Kettenseite. Erfindungsgemäß besitzt das Kurvensteuermodul der Steuervorrichtung für die Einzelantriebe eines solchen Kettenfahrzeugs einen Ausfall-Steuerbaustein zum Steuern des funktionsfähig verbliebenen Antriebs einer Raupenkette bei Ausfall des Antriebs der anderen Raupenkette, wobei der genannte Ausfall-Steuerbaustein dazu ausgebildet ist, den verbliebenen Antrieb in Abhängigkeit der von der Sensoreinrichtung erfassten Ist-Geschwindigkeit der Raupenkette, deren Antrieb ausgefallen ist, und in Abhängigkeit des Lenksignals so zu steuern, dass die zumindest zwei Raupenketten die für das Lenksignal benötigten unterschiedlichen Ist-Geschwindigkeiten aufweisen. Gibt das Lenksignal eine Geradeausfahrt vor, sind die benötigten Ist-Geschwindigkeiten natürlich gleich und die Differenzgeschwindigkeit Null.

Der genannte Ausfall-Steuerbaustein, der bei Ausfall eines der Einzelantriebe aktiviert wird, verwendet also für die Ansteuerung des funktionsfähig verbliebenen Antriebs nicht mehr das Soll-Geschwindigkeitssignal, das im Normalbetrieb aus der Geschwindigkeitsvorgabe und dem Lenksignal berechnet werden kann, sondern verwendet das Ist-Geschwindigkeitssignal der anderen, ausgefallenen Raupenkette und berechnet unter Berücksichtigung des Lenksignals, jedoch unter Missachtung der Soll-Geschwindigkeit, die vom Fahrgeschwindigkeits-Wählhebel vorgegeben ist, ein neues Ansteuersignal für den funktionsfähig verbliebenen Antrieb, um trotz unangetriebener anderer Raupenkette den Kurvenradius einzuhalten, der dem vorgegebenen Lenksignal bzw. dem dahinter stehenden Lenkwunsch des Fahrzeugführers entspricht.

Die genannte Sensoreinrichtung, die die Ist-Geschwindigkeiten der zumindest zwei Raupenketten erfasst, ist dabei vorteilhafter Weise redundant ausgebildet, um die Ist-Geschwindigkeit jeder der zumindest zwei Raupenketten auch dann verlässlich erfassen zu können, wenn der zugehörige Antrieb ausgefallen ist.

Dabei kann die Sensoreinrichtung die Antriebsgeschwindigkeiten der zumindest zwei Raupenketten an verschiedenen Stellen bzw. Elementen erfassen. Vorteilhafter Weise kann die Sensoreinrichtung Drehzahlsensoren zum Erfassen der Ist-Drehzahl eines Kettenrads jeder der zumindest zwei Raupenketten aufweisen und/oder Drehzahlsensoren zum Erfassen der Ist-Drehzahl der Abtriebsseite oder - welle jeder der separaten Antriebe und/oder Drehzahlsensoren zum Erfassen der Ist-Drehzahl eines Antriebsstrangs-Übertragungselements zwischen dem Turas einer jeden Raupenkette und der Abtriebswelle eines jeden Antriebs.

Grundsätzlich wäre es auch möglich, dass die Sensoreinrichtung direkt die Laufgeschwindigkeit der Raupenkette erfasst, beispielsweise durch einen Sensor mit einem an der Kette ablaufenden Tastrad, oder einer berührungslosen Erfassungseinrichtung zum Bestimmen der Laufgeschwindigkeit der Kette.

Der genannte Ausfall-Steuerbaustein kann dabei den funktionsfähig verbliebenen Antrieb nicht nur für Kurvenfahrten ansteuern, sondern auch für eine Geradeausfahrt in Abhängigkeit des Ist-Drehzahl- bzw. -Geschwindigkeitssignals der ausgefallenen Raupenkette ansteuern, wenn das Lenksignal eine Geradeausfahrt vorgibt.

Vorteilhafter Weise ist der genannte Ausfall-Steuerbaustein dabei derart ausgebildet, dass das Lenksignal, anhand dessen der funktionsfähig verbliebene Antrieb unter Berücksichtigung der Geschwindigkeit der ausgefallenen Raupenkette angesteuert wird, laufend oder zyklisch aktualisiert wird, um nach einem Ausfall eines Antriebs einem erst dann eingegebenen Lenkwunsch zu entsprechen. Lenkt also der Maschinenführer das Kettenfahrzeug geradeaus, wenn einer der Antrieb ausfällt, steuert der genannte Ausfall-Steuerbaustein den funktionsfähig verbliebenen Antrieb zunächst derart an, dass unter Berücksichtigung der ausgefallenen Raupenkette das Fahrzeug weiterhin geradeaus fährt. Lenkt jedoch dann der Maschinenführer ein, beispielsweise um einem Hindernis auszuweichen, berücksichtigt der Ausfall-Steuerbaustein das aktualisierte Lenksignal und führt den funktionsfähig verbliebenen Antrieb der aktuellen Ist-Geschwindigkeit der ausgefallenen Raupenkette derart nach, dass das Fahrzeug einen Kurvenradius fährt, der dem Lenkwunsch entspricht.

Um je nach Fahrsituation, beispielsweise Bergauf- oder Bergabfahrt, den funktionsfähig verbliebenen Antrieb nicht nur weiter antreiben zu können, sondern gegebenenfalls die funktionsfähig gebliebene Raupenkette auch abbremsen zu können, um die gewünschte Geradeaus- oder Kurvenfahrt einhalten zu können, kann in vorteilhafter Weiterbildung der Erfindung der funktionsfähig verbliebene Antrieb vorteilhafter Weise auch gebremst werden bzw. ein Bremsmoment bereitstellen.

Vorteilhafter Weise können die Einzelantriebe als Elektromotoren ausgebildet sein bzw. einen Elektromotor umfassen, wobei zum Bereitstellen auch eines Bremsmoments vorteilhafter Weise ein Bremswiderstand beispielsweise in Form einer Grid-Box zugeschaltet werden kann, was von dem genannten Ausfall-Steuerbaustein veranlasst werden kann.

Grundsätzlich können die Antriebsmotoren aber nicht nur Elektromotoren sein, sondern auch als Hydraulikmotoren ausgebildet sein, die von einer Druckquelle, beispielsweise einer Pumpe her versorgt werden.

Bei elektrischen Antriebsmotoren kann es vorteilhaft sein, jeden der Elektromotoren, die jeweils eine der zumindest zwei Raupenketten antreiben, jeweils einen Umrichter zuzuordnen, über den der jeweilige Motor angesteuert werden kann.

Zur Energieversorgung kann das Kettenfahrzeug einen Generator aufweisen, der von einem Verbrennungsmotor her, beispielsweise einem Dieselmotor, angetrieben werden kann, wobei in Weiterbildung der Erfindung der vom Generator erzeugte Strom einem Gleichrichter zugeführt werden kann, der dann den Strom auf jeden der beiden genannten Umrichter geben kann.

Ein Bremswiderstand kann dem genannten Gleichrichter aufgeschaltet werden, um auch Bremsen zu können bzw. am Antriebsmotor ein Bremsmoment erzeugen zu können, welches ansonsten dem Generator zurückgespeist werden würde, was grundsätzlich auch möglich ist, um das Bremsmoment des Verbrennungsmotors nutzen zu können.

Ist einer der beiden Elektromotoren ausgefallen, kann der genannte Bremswiderstand, auch wenn er noch dem zentralen Gleichrichter zugeordnet ist, und/oder die Bremsleistung des Generators zum Bremsen des noch funktionsfähigen Antriebsmotors genutzt werden.

Gleichwohl wäre es alternativ oder zusätzlich auch möglich, jedem der beiden oder mehreren Antriebsmotoren einen separaten Bremswiderstand zuzuordnen, um individuell bremsen zu können.

Alternativ oder zusätzlich zu einem regeneratorischen Bremsen über den Antriebsmotor kann eine Bremsleistung auch durch eine mechanische Bremse erzeugt werden, die vorteilhafter Weise von dem genannten Ausfall-Steuerbaustein angesteuert werden kann, wenn dies notwendig ist, um bei Ausfall eines Antriebsmotors den für eine Kurvenfahrt benötigten Geschwindigkeitsunterschied bereitzustellen. Vorteilhafter Weise kann jedem Kettenrad und/oder der Abtriebswelle eines jeden Antriebsmotors und/oder einem dazwischenliegenden Antriebsstrang-Element eine mechanische Bremseinrichtung zugeordnet sein, um an jedem Kettenrad ein Bremsmoment erzeugen zu können, wenn dies notwendig ist. Vorteilhafter Weise kann jede der genannten Bremseinrichtungen von dem Ausfall-Steuerbaustein angesteuert werden, um bei Ausfall eines Antriebs das Kettenrad des ausgefallenen Antriebs und/oder das Kettenrad des noch funktionsfähigen Antriebs abbremsen zu können, wenn dies notwendig ist. Vorteilhafter Weise steuert der genannte Steuer-Ausfallbaustein die jeweilige Bremseinrichtung in Abhängigkeit des Ist-Geschwindigkeitssignals der ausgefallenen Raupenkette und in Abhängigkeit des Lenksignals an, um den notwendigen Geschwindigkeitsunterschied der beiden Raupenketten zu bewirken, wobei dieser - bei einem Lenksignal für Geradeausfahrt - auch Null sein kann.

Bei Verwendung eines Zentralantriebs, der über ein Überlagerungs-Lenkgetriebe die zumindest zwei Raupenketten antreibt, ist nach einem weiteren Aspekt der vorliegenden Erfindung ebenfalls ein Ausfall-Steuerbaustein vorgesehen, der bei Ausfall des Lenkantriebs oder bei Ausfall des Zentralantriebs und/oder bei einem Ausfall des Überlagerungslenkgetriebes aktiviert wird und zumindest eine der mechanischen Bremseinrichtungen, die zum Bremsen einer jeden Raupenkette vorgesehen sind, in Abhängigkeit der von einer Sensoreinrichtung erfassten Ist-Geschwindigkeiten der beiden Raupenketten und in Abhängigkeit des Lenksignals so ansteuert, dass die Raupenketten die dem Lenksignal entsprechenden unterschiedlichen Ist-Geschwindigkeiten aufweisen. Für den Fall, dass das Lenksignal einer Geradeausfahrt entspricht, können die Bremseinrichtungen von dem genannten Ausfall-Steuerbaustein natürlich auch so angesteuert werden, dass die Raupenketten dieselben Ist-Geschwindigkeiten aufweisen.

Mit anderen Worten wird also im Fehlerfall, wenn der Antriebsstrang auf einer Seite bricht oder der Lenkantrieb ausfällt, die Bremse des Antriebs der noch funktionsfähigen Seite und/oder die Bremse auf der ausgefallenen Seite, sofern dort die Bremse noch funktioniert, so angesteuert, dass - immer noch dem aktuellen Lenkkommando folgend - sich die Drehzahl des Kettenrads der funktionsfähigen Seite im Verhältnis zur Drehzahl des Kettenrads der fehlerhaften Seite so einstellt, wie dies zum Befahren der kommandierten Kurve - oder ggfs. eben geradeaus - erforderlich ist. Das Fahrzeug bleibt hierdurch zu jeder Zeit lenkbar und kann mit den üblichen Bremsfunktionen sicher zum Stillstand gebracht werden.

Auch hier, das heißt bei einem solchen Zentralantrieb, ist die Sensoreinrichtung in der beschriebenen Weise vorteilhafter Weise redundant ausgebildet und kann die ebenfalls schon beschriebenen Drehzahlsensoren oder auch anderen Sensoren zur Geschwindigkeitserfassung aufweisen.

Auch die übrigen bereits erläuterten Ausbildungen des Kettenfahrzeugs können bei dem Zentralantrieb analog vorgesehen werden.

Die Erfindung wird nachfolgend anhand bevorzugter Ausführungsbeispiele und zugehöriger Zeichnungen näher erläutert. In den Zeichnungen zeigen:
- Fig. 1:: eine schematische Darstellung eines Kettenfahrzeugs mit Einzelantrieben, die jeweils einen unabhängig ansteuerbaren Elektromotor zum Antreiben des Turas einer jeden Raupenkette aufweist, und
- Fig. 2:: eine schematische Darstellung des Zentralantriebs eines Kettenfahrzeugs, dessen zentraler Antriebsmotor über ein ÜberlagerungsLenkgetriebe die beiden Turas der beiden Raupenketten antreibt.

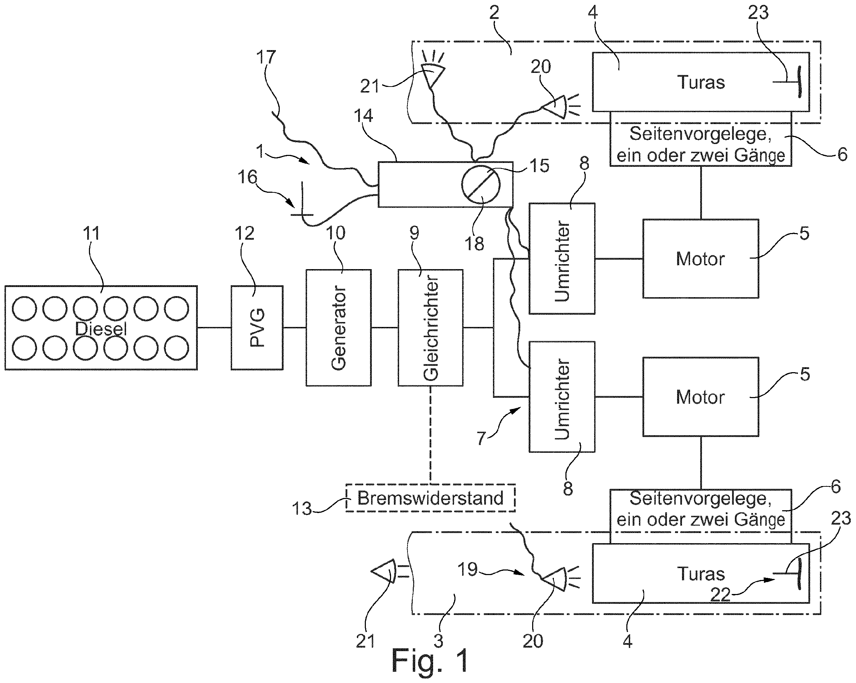

Wie Fig. 1 zeigt, kann das Kettenfahrzeug 1 rechts und links am Fahrzeugkorpus bzw. Chassis jeweils eine Raupenkette 2 und 3 aufweisen, die endlos umlaufend über mehrere Kettenräder geführt sein können und zusammen das Fahrwerk des Kettenfahrzeugs 1 bilden. Die Raupenketten 2, 3 können dabei je nach Typ des Kettenfahrzeugs unterschiedlich ausgebildet sein, beispielsweise in Form einer Stahlgliederkette, einer Kunststoff- und/oder Gummi-Profilkette oder auch einer Profilstabkette, die beispielsweise zum Planieren von Skipisten verwendet wird.

Wie Fig. 1 weiterhin zeigt, wird jede der Raupenketten 2 und 3 jeweils von einem Turas 4 angetrieben, der umfangsseitig mit der Innenseite der jeweiligen Raupenkette 2 und 3 in Eingriff steht und rotatorisch um seine Rotationsachse, die liegend quer zur Fahrtrichtung angeordnet sein kann, rotatorisch angetrieben werden kann.

Fig. 1 zeigt dabei einen Einzelantrieb, bei dem jeder Turas 4 von einem eigenen Antriebsmotor 5 her angetrieben werden kann, wobei die Antriebsmotoren 5 mit ihrer Abtriebswelle koaxial zur Turasachse angeordnet oder auch parallel dazu versetzt angeordnet sein können, insbesondere dann, wenn zwischen Antriebsmotor 5 und Turas 4 noch ein Getriebe beispielsweise in Form eines Vorgelegegetriebes mit ein oder zwei oder auch mehr Gängen zwischengeschaltet ist. Wie Fig. 1 zeigt, können die beiden Turas 4 der beiden Raupenketten 2 und 3 zueinander koaxial angeordnet sein, wobei in diesem Fall die Antriebsmotoren 5 vorteilhafter Weise ebenfalls koaxial zueinander, insbesondere mit den Motorwellen quer zur Fahrtrichtung ausgerichtet, angeordnet sein können. Grundsätzlich ist es aber auch möglich, die Turas 4 in Fahrtrichtung zueinander versetzt anzuordnen, insbesondere auch dann, wenn die Raupenketten 2 und 3 in Fahrtrichtung auf selber Höhe angeordnet sind, beispielsweise dadurch, dass der eine Turas 4 am hinteren Ende der einen Raupenkette und der andere Turas 4 am vorderen Ende der anderen Raupenkette angeordnet wird.

Weiterhin wäre es auch möglich, die Antriebsmotoren 5 mit ihren Motorwellen quer zur Antriebsachse der Turas 4 anzuordnen, beispielsweise über eine Winkelstufe rechtwinklig zur Antriebsachse oder parallel versetzt über eine Stirnradgetriebestufe.

Die Antriebsmotoren 5 können vorteilhafter Weise Elektromotoren sein, wobei grundsätzlich aber auch ein Hydraulikmotor in Betracht käme, sowie ebenfalls Hybridmischformen.

Vorteilhafter Weise kann jeder der Antriebsmotoren 5 individuell und unabhängig vom anderen Antriebsmotor 5 angesteuert werden, um die Drehzahlen der beiden Turas 4 unabhängig voneinander einstellen bzw. gegeneinander variieren zu können und dementsprechend die Raupenketten 2 und 3 verschieden schnell anzutreiben.

Wie Fig. 1 zeigt, kann jedem der Antriebsmotoren 5 ein eigenes Ansteuermodul 7 zugeordnet sein, das bei Ausbildung der Antriebsmotoren 5 als Elektromotoren jeweils einen Umrichter 8 umfassen kann, der die Strombeaufschlagung der Antriebsmotoren 5 richtet.

Die beiden Umrichter 8 können von einem Gleichrichter 9 her gespeist werden, der den von einem Generator 10 erzeugten Strom auf die genannten Umrichter 8 gibt.

Der genannte Generator 10 kann von einem Verbrennungs-, beispielsweise Dieselmotor 11 her angetrieben werden, beispielsweise direkt oder über ein Getriebe, beispielsweise in Form eines Pumpenverteilergetriebes 12.

Wie Fig. 1 weiterhin zeigt, kann der Versorgungskreis, an den die Elektromotoren 5 angeschlossen sind, weiterhin einen Bremswiderstand 13 umfassen, beispielsweise in Form einer Grid-Box, um die Antriebsmotoren 5 bremsen zu können und beim Generatorbetrieb der Antriebsmotoren 5 rückgespeiste Energie an dem genannten Bremswiderstand 13 thermisch abbauen zu können. Wie schon erläutert, könnte zum Bremsen der Antriebsmotoren 5 ein dort erzeugtes Bremsmoment auch über den Generator 10 und den damit verbundenen Verbrennungsmotor 11 abgestützt werden.

Durch die beiden Umrichter 8 können die Drehzahlen der Antriebsmotoren 5 gegeneinander variiert und individuell eingestellt werden, was insbesondere dazu genutzt werden kann, mit dem Kettenfahrzeug 1 Kurven zu fahren, indem eine Raupenkette schneller umläuft als die andere Raupenkette.

Die elektronische Steuervorrichtung 14, die beispielsweise einen Mikroprozessor, einen Speicherbaustein mit darin abgelegter Software und weitere Hardwarebausteine umfassen kann, kann hierzu die Leistungselektronik, an die die Antriebsmotoren 5 angebunden sind, ansteuern, und zwar insbesondere über die genannten Umrichter 8.

Wie Fig. 1 zeigt, kann die genannte Steuervorrichtung 14 hierbei ein Kurvensteuermodul 15 umfassen, das eingangsseitig ein Lenksignal von einer Lenkvorrichtung 16 erhält, über die ein Fahrzeugführer seinen Lenkwunsch eingeben kann. Eine solche Lenkvorrichtung kann ein klassisches Steuerrad, aber auch einen Joystick oder andere Lenkerausbildungen umfassen. Beispielsweise kann die Lenkvorrichtung 16 einen Lenkwinkeldetektor aufweisen, der den Einschlagwinkel eines Steuerrads erfasst und ein zum Einschlagwinkel proportionales Lenksignal bereitstellt, welches dann das Kurvensteuermodul 15 verarbeitet, um an den Antriebsmotoren 5 entsprechende, insbesondere verschiedene Antriebsdrehzahlen zu erzeugen, sodass sich die Raupenketten 2 und 3 unterschiedlich schnell bewegen.

Ferner umfasst die genannte Steuervorrichtung 14 ein Geschwindigkeitssteuermodul 17, welches die Fahrgeschwindigkeit des Kettenfahrzeugs 1 steuert bzw. regelt und ein Fahrgeschwindigkeitssignal an die Leistungselektronik gibt, insbesondere die genannten Umrichter 8, um die Antriebsmotoren 5 mit einem entsprechenden Drehmoment und/oder einer entsprechenden Geschwindigkeit zu betreiben. Das genannte Fahrgeschwindigkeits-Steuermodul 17 kann hierbei einen Fahrgeschwindigkeits-Wunschhebel, beispielsweise in Form eines Gaspedals oder eines Joysticks, umfassen, um dem Fahrzeugführer zu ermöglichen, einen Fahrgeschwindigkeitswunsch anzugeben, in Abhängigkeit dessen dann - unter Berücksichtigung der Leistungsreserven - die Antriebsmotoren 5 über den genannten Umrichter 8 angesteuert werden und den Fahrgeschwindigkeitswunsch umsetzen.

Im Zusammenspiel mit dem zuvor genannten Kurvensteuermodul 15 kann das Geschwindigkeitssteuersignal des Fahrgeschwindigkeitsreglers als Grundsteuersignal umgesetzt und bei Eingeben eines Kurven- bzw. Lenkwinkelwunsch dann für die rechten und linken Antriebsmotoren entsprechend abgeändert werden, um bei grundsätzlicher Umsetzung der gewünschten Fahrgeschwindigkeit rechts und links unterschiedlicher Kettengeschwindigkeiten einzustellen, die die Kurvenfahrt ermöglichen.

Fällt nun einer der Antriebsmotoren 5 aus, schaltet die genannte Steuervorrichtung 14 in einen Ausfallmodus, in dem die Ansteuerung der Antriebsmotoren 5 umgestellt wird.

Insbesondere wird bei Ausfall eines der Antriebsmotoren 5 ein Ausfall-Steuerbaustein 18 aktiviert, der Teil der elektronischen Steuervorrichtung 14 sein kann und den funktionsfähig verbliebenen Antriebsmotor 5 so ansteuert, dass trotz ausgefallenem anderen Antriebsmotor der gewünschte Kurvenradius eingehalten bzw. möglichst eingehalten wird.

Hierzu umfasst das Kettenfahrzeug 1 eine redundant ausgebildete Sensoreinrichtung 19, die die Ist-Geschwindigkeit einer jeden Raupenkette 2 und 3 erfasst, was unmittelbar oder mittelbar bewerkstelligt werden kann. Beispielsweise kann die Sensoreinrichtung 19 ein Paar Drehzahlsensoren 20 umfassen, die die Drehzahlen der beiden Turas 4 erfassen und/oder die Drehzahlen der Ausgangswelle der Zwischengetriebe 6 in Form der beschriebenen Seitenvorgelege. Alternativ oder zusätzlich kann die genannte Sensoreinrichtung 19 auch Kettengeschwindigkeitssensoren 21 umfassen, die die Umlaufgeschwindigkeit der Raupenketten 2 und 3 erfassen.

Fällt also einer der beiden Antriebsmotoren 5 aus, steuert der genannte Ausfall-Steuerbaustein 18 den funktionsfähig verbliebenen Antriebsmotor 5 in Abhängigkeit der erfassten Ist-Geschwindigkeit der anderen Raupenkette, deren Antriebsmotor ausgefallen ist, unter Berücksichtigung des Lenkwinkelsignals des Kurvensteuermoduls 15 bzw. der Lenkvorrichtung 16 an. In Abhängigkeit der gemessenen Ist-Geschwindigkeit der nicht mehr angetriebenen Raupenkette, deren Antriebsmotor ausgefallen ist, wird die Umlaufgeschwindigkeit der anderen Raupenkette so nachgeführt, dass der Geschwindigkeitsunterschied zwischen nicht mehr angetriebener Raupenkette und angetriebener Raupenkette zu einem Kurvenradius führt, der dem Lenkwunsch bzw. den genannten Lenksignal entspricht.

Hierzu wird der Antriebsmotor 5 der noch funktionsfähigen Seite so angesteuert, dass er - immer noch dem aktuellen Lenkkommando folgend - die Drehzahl im Verhältnis zur fehlerhaften Seite einstellt, die zum Befahren der kommandierten Kurve - oder gegebenenfalls auch geradeaus - erforderlich ist.

Ist zum Aufrechterhalten der für die Kurvenfahrt notwendigen Geschwindigkeitsdifferenz zwischen den beiden Raupenketten 2 und 3 ein Abbremsen des noch funktionsfähigen Antriebsmotors 5 erforderlich, kann das genannte Ausfall-Steuermodul 18 auch ein regeneratorisches Bremsen beispielsweise über den genannten Bremswiderstand 13 vorsehen.

Das Kettenfahrzeug 1 kann ferner auch eine Bremsvorrichtung 22 mit mechanischen Bremsen 23 zum mechanischen Bremsen einer jeden der Raupenketten 2 und 3 aufweisen, wobei solche mechanischen Bremsen 23 beispielsweise an der Antriebswelle des Turas 4 angreifen oder auch den Turas 4 selbst bremsen können, wobei alternativ oder zusätzlich aber auch ein spezielles, separates Kettenrad, das mit der jeweiligen Raupenkette 2 bzw. 3 in Eingriff steht, als Bremsrad dienen und gebremst werden kann.

Bei Bedarf kann der genannte Ausfall-Steuerbaustein 18 die Bremsvorrichtung 22 zu Hilfe nehmen und ansteuern, um zumindest eine der mechanischen Bremsen 23 zu betätigen, um den für eine kommanditierte Kurve benötigten Geschwindigkeitsunterschied an den Raupenketten 2 und 3 sicherzustellen.

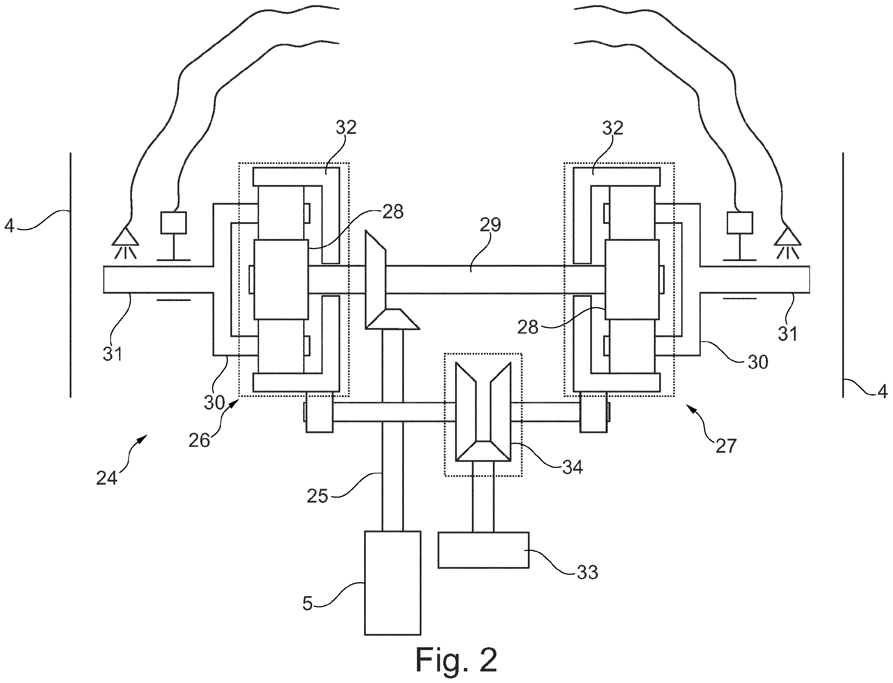

Wie Fig. 2 zeigt, kann das Kettenfahrzeug 1 auch einen zentralen Antrieb umfassen, bei dem ein zentraler Antriebsmotor 5 beide Turas 4 antreibt. Um die rotatorische Antriebsbewegung des Antriebsmotors 5 auf beide Turas 4 aufzuspalten bzw. zu verzweigen, kann ein Überlagerungslenkgetriebe 24 vorgesehen sein, das eine zentrale Eingangswelle 25 aufweisen kann, die von dem Antriebsmotor 5 angetrieben wird, vgl. Fig. 2.

Ein solches Überlagerungslenkgetriebe 24 kann zwei Planetengetriebe 26, 27 umfassen, deren Sonnenräder 28 vorteilhafter Weise koaxial zueinander angetrieben und durch eine gemeinsame Antriebswelle 29 synchronisiert sein können, vgl. Fig. 2, wobei die genannte Antriebswelle 29 und damit beide Sonnenräder 28 von dem Antriebsmotor 5 her angetrieben werden können.

Jeder der Planetenträger 30 der Planetengetriebe 26 und 27 können über jeweils eine Abtriebswelle 31 den Turas 4 der rechten bzw. linken Raupenkette 2 und 3 antreiben, vgl. Fig. 2.

Um die Antriebsgeschwindigkeiten der linken und rechten Raupenketten 2 und 3 trotz des zentralen Antriebsmotors gegeneinander variieren zu können, ist vorgesehen, die beiden Hohlräder 32 der beiden Planetengetriebe gegensinnig zueinander anzutreiben, und zwar von einem Lenkantrieb 33, der in Abhängigkeit des genannten Lenksignals angesteuert wird und über eine gegenläufige Getriebestufe 34 die Hohlräder 32 zueinander gegensinnig verdrehen kann, vgl. Fig. 2.

Fällt eine Antriebsseite aus, beispielsweise durch Bruch des Planetenträgers, oder fällt der Lenkantrieb 33 aus, sodass das Kettenfahrzeug 1 einen vorgegebenen Kurvenradius nicht mehr halten würde, wird der schon erwähnte Ausfall-Steuerbaustein aktiviert, um die "normale" Ansteuerung des zentralen Antriebsmotors 5 und des Lenkantriebs 33 zu ersetzen bzw. zu modifizieren und in einem Ausfall-Betriebsmodus die Kurvenfahrt sicherzustellen. Hierzu steuert der genannte Ausfall-Steuerbaustein die Bremsvorrichtung 22 an und betätigt zumindest eine der beiden mechanischen Bremsen 23, um die für das vorgegebene Lenksignal und den entsprechend gewünschten Kurvenradius erforderliche Drehzahldifferenz der beiden Turas 4 sicherzustellen. Wie Fig. 2 zeigt, können die beiden Bremsen 23 beispielsweise auf die Abtriebswelle 29 wirken, die die Planetengetriebe 26 und 27 mit den beiden Turas 4 verbindet.

Die Ansteuerung der Bremsvorrichtung 22 erfolgt hierbei, im Zusammenspiel mit dem genannten Lenksignal, in Abhängigkeit der von der Sensoreinrichtung 19 erfassten Ist-Geschwindigkeiten der beiden Raupenketten 2 und 3, wobei hier beispielsweise Drehzahlsensoren 20 die Drehgeschwindigkeiten des Turas 4 oder der genannten Abtriebswellen 31 erfassen können, vgl. Fig. 2.

## Patentansprüche

1. Kettenfahrzeug mit zumindest zwei Raupenketten (2, 3), die jeweils von zumindest einem eigenen Antrieb antreibbar sind, ferner mit einer Sensoreinrichtung (19) zum Erfassen der Ist-Geschwindigkeit jeder der zumindest zwei Raupenketten (2, 3), zumindest einer Steuervorrichtung (14) zum Steuern der Antriebsgeschwindigkeit der beiden Antriebe, wobei die Steuervorrichtung (14) ein Kurvensteuermodul (15) zum Einstellen unterschiedlicher Antriebsgeschwindigkeiten für die zumindest zwei Raupenketten (2, 3) für Kurvenfahrten in Abhängigkeit eines Lenksignals eines Lenksignalgebers umfasst, **dadurch gekennzeichnet, dass** das Kurvensteuermodul (15) einen Ausfall-Steuerbaustein (18) zum Steuern eines verbliebenen Antriebs einer Raupenkette (2, 3) bei Ausfall des Antriebs der anderen Raupenkette (3, 2) aufweist, wobei der Ausfall-Steuerbaustein (18) dazu ausgebildet ist, den funktionsfähig verbliebenen Antrieb in Abhängigkeit der von der Sensoreinrichtung (19) erfassten Ist-Geschwindigkeit der Raupenkette (2, 3), deren Antrieb ausgefallen ist, und in Abhängigkeit des Lenksignals so zu steuern, dass die Raupenketten (2, 3) die für das Lenksignal jeweils erforderliche Differenzgeschwindigkeit aufweisen.

2. Kettenfahrzeug nach dem vorhergehenden Anspruch, wobei die Sensoreinrichtung (19) Drehzahlsensoren (20) zum Erfassen der Ist-Drehzahl eines Kettenrads (4) jeder der zumindest zwei Raupenketten (2, 3) und/oder der Antriebsdrehzahl der Antriebe aufweist.

3. Kettenfahrzeug nach einem der vorhergehenden Ansprüche, wobei die Antriebe der zumindest zwei Raupenketten (2, 3) jeweils einen elektrischen Antriebsmotor (5) aufweisen, die jeweils von einem eigenen Umrichter (8) ansteuerbar sind, wobei die genannten Umrichter (8) von dem Kurvensteuermodul (15) und dessen Ausfall-Steuerbaustein (18) einzeln ansteuerbar sind.

4. Kettenfahrzeug nach einem der vorhergehenden Ansprüche, wobei das Kurvensteuermodul (15) dazu ausgebildet ist, ein Fahrgeschwindigkeitssignal eines Fahrgeschwindigkeitsreglers und/oder -steuermoduls (17) zu berücksichtigen und die Umrichter (8) bei Funktionsfähigkeit beider Antriebe beider Raupenketten (2, 3) in Abhängigkeit des Fahrgeschwindigkeitsignals ansteuert, während der Ausfall-Steuerbaustein dazu ausgebildet ist, das Fahrgeschwindigkeitssignal für die Ansteuerung des Umrichters (8) des funktionsfähig verbliebenen Antriebs bei Ausfall des anderen Antriebs zu missachten und stattdessen das Ist-Geschwindigkeitssignal der Sensoreinrichtung (19) zu beachten.

5. Kettenfahrzeug nach einem der vorhergehenden Ansprüche, wobei die Antriebe (5) der Raupenkette (2, 3) von einem Generator (10) mit elektrischer Energie versorgbar sind, der von einem Verbrennungsmotor (11) antreibbar ist, wobei das Kurvensteuermodul (15) und/oder der Ausfall-Steuerbaustein (18) dazu ausgebildet ist, bei Ausfall eines Antriebs den funktionsfähig verbliebenen Antrieb bei Bedarf abzubremsen und hierfür den funktionsfähigen Antrieb generatorisch zu betreiben, wobei rückgespeister Strom über einen Bremswiderstand (13) im Versorgungskreis zwischen Antrieb (5) und Generator (10) und/oder über den Generator (10) auf dem Verbrennungsmotor (11) abgestützt wird.

6. Kettenfahrzeug nach einem der vorhergehenden Ansprüche, wobei den beiden Raupenketten (2, 3) eine Bremsvorrichtung (22) mit einer mechanischen Bremse (23) für jede der Raupenketten (2, 3) zugeordnet ist, wobei die mechanischen Bremsen (23) von dem genannten Ausfall-Steuerbaustein (18) bei Ausfall eines Antriebs in Abhängigkeit der gemessenen Ist-Geschwindigkeiten der beiden Raupenketten (2, 3) und in Abhängigkeit des Lenksignals ansteuerbar sind.

7. Kettenfahrzeug mit zumindest zwei Raupenketten (2, 3), die von einem zentralen Antrieb (5) über ein Überlagerungslenkgetriebe (24) antreibbar sind, welches vorzugsweise zwei Getriebe, insbesondere Planetengetriebe (26, 27) aufweist, die zwei miteinander synchronisierte, von dem zentralen Antrieb her antreibbare erste Getriebeelemente, insbesondere Sonnenräder (28), ferner jeweils ein zweites, mit einem Kettenrad einer der Raupenketten (2, 3) antriebsverbundenes Getriebeelement, insbesondere Planetenträger, sowie von einem Lenkantrieb (33) gegenläufig antreibbare dritte Getriebeelemente, insbesondere Hohlräder, aufweist, wobei eine Steuervorrichtung zum Steuern der Antriebsgeschwindigkeit des zentralen Antriebs (5) vorgesehen ist und ein Kurvensteuermodul (15) zum Ansteuern des Lenkantriebs (33) in Abhängigkeit eines Lenksignals eines Lenksignalgebers aufweist, wobei eine Bremsvorrichtung (29) mit jeweils einer mechanischen Bremse (23) für jede der Raupenkette (2, 3) vorgesehen ist, **dadurch gekennzeichnet, dass** das Kurvensteuermodul (15) einen Ausfall-Steuerbaustein (18) zum Ansteuern der Bremsvorrichtung (29) bei Ausfall des Lenkantriebs (33) und/oder Ausfall einer Antriebsseite des Überlagerungs-Lenkgetriebes (24) umfasst, wobei der genannte Ausfall-Steuerbaustein (18) dazu ausgebildet ist, zumindest eine der mechanischen Bremsen (23) in Abhängigkeit der von einer Sensoreinrichtung (19) erfassten Ist-Geschwindigkeit zumindest einer der beiden Raupenketten (2, 3) und in Abhängigkeit des Lenksignals so anzusteuern, dass die Raupenketten (2, 3) die für das Lenksignal erforderlichen unterschiedlichen Ist-Geschwindigkeiten aufweisen.

8. Kettenfahrzeug nach dem vorhergehenden Anspruch, wobei der Ausfall-Steuerbaustein (18) dazu ausgebildet ist, die mechanische Bremse (23) einer Raupenkette (2, 3) so anzusteuern, dass die für beide Raupenketten (2, 3) erfassten Ist-Geschwindigkeiten im Verhältnis zueinander dem Lenksignal entsprechen.

## Claims

1. A tracked vehicle comprising at least two crawler chains (2, 3) which can each be driven by at least one separate drive, furthermore comprising a sensor device (19) for detecting the actual speed of each of the at least two crawler chains (2, 3), at least one control device (14) for controlling the driving speed of the two drives, wherein the control device (14) comprises a curve control module (15) for setting different driving speeds for the at least two crawler chains (2, 3) for cornering in dependence on a steering signal of a steering signal transmitter, **characterized in that** the curve control module (15) includes a failure control module (18) for controlling a remaining drive of a crawler chain (2, 3) upon failure of the drive of the other crawler chain (3, 2), wherein the failure control module (18) is configured to control the still operable drive in dependence on the actual speed of the crawler chain (2, 3) whose drive has failed, which is detected by the sensor device (19), and to control it in dependence on the steering signal such that the crawler chains (2, 3) have the differential speed each required for the steering signal.

2. The tracked vehicle according to the preceding claim, wherein the sensor device (19) includes speed sensors (20) for detecting the actual rotational speed of a sprocket (4) of each of the at least two crawler chains (2, 3) and/or the driving speed of the drives.

3. The tracked vehicle according to any of the preceding claims, wherein the drives of the at least two crawler chains (2, 3) each include an electric drive motor (5), which drive motors can each be actuated by a separate converter (8), wherein said converters can be actuated individually by the curve control module (15) and its failure control module (18).

4. The tracked vehicle according to any of the preceding claims, wherein the curve control module (15) is configured to take account of a driving speed signal of a driving speed controller and/or control module (17) and actuates the converters (8) in dependence on the driving speed signal, when both drives of both crawler chains (2, 3) are operable, while the failure control module is configured to ignore the driving speed signal for the actuation of the converter (8) of the still operable drive upon failure of the other drive, and instead observe the actual speed signal of the sensor device (19).

5. The tracked vehicle according to any of the preceding claims, wherein the drives (5) of the crawler chain (2, 3) can be supplied with electric energy by a generator (10), which can be driven by an internal combustion engine (11), wherein the curve control module (15) and/or the failure control module (18) is/are configured to brake the still operable drive upon failure of a drive, if necessary, and therefor operate the operable drive as a generator, wherein regenerative current is supported via a braking resistance (13) in the power supply circuit between drive (5) and generator (10) and/or via the generator (10) on the internal combustion engine (11).

6. The tracked vehicle according to any of the preceding claims, wherein a braking device (22) comprising a mechanical brake (23) for each of the crawler chains (2, 3) is associated to the two crawler chains (2, 3), wherein the mechanical brakes (23) can be actuated by said failure control module (18) upon failure of a drive in dependence on the measured actual speeds of the two crawler chains (2, 3) and in dependence on the steering signal.

7. A tracked vehicle comprising at least two crawler chains (2, 3) which can be driven by a central drive (5) via a superimposed steering transmission (24) preferably including two gear sets, in particular planetary gear sets (26, 27), which includes two first transmission elements, in particular sun gears (28), synchronized with each other and to be driven by the central drive, furthermore each includes a second transmission element, in particular planet carrier, which is in drive connection with a sprocket of one of the crawler chains (2, 3), and includes third transmission elements, in particular ring gears, to be driven in mutually opposite directions by a steering drive (33), wherein there is provided a control device for controlling the driving speed of the central drive (5) and a curve control module (15) for actuating the steering drive (33) in dependence on a steering signal of a steering signal transmitter, wherein a braking device (29) is provided with one mechanical brake (23) each for each of the crawler chains (2, 3), **characterized in that** the curve control module (15) comprises a failure control module (18) for actuating the braking device (29) upon failure of the steering drive (33) and/or upon failure of a drive side of the superimposed steering transmission (24), wherein said failure control module (18) is configured to actuate at least one of the mechanical brakes (23) in dependence on the actual speed of at least one of the two crawler chains (2, 3), which is detected by a sensor device (19), and in dependence on the steering signal such that the crawler chains (2, 3) have the different actual speeds required for the steering signal.

8. The tracked vehicle according to the preceding claim, wherein the failure control module (18) is configured to actuate the mechanical brake (23) of a crawler chain (2, 3) in such a way that the actual speeds detected for both crawler chains (2, 3) in relation to each other correspond to the steering signal.

## Revendications

1. Véhicule à chenilles avec au moins deux chenilles (2, 3), qui peuvent être entraînées chacune par au moins un entraînement propre, avec en outre un dispositif capteur (19) pour détecter la vitesse réelle de chacune des au moins deux chenilles (2, 3), au moins un dispositif de commande (14) pour commander la vitesse d'entraînement des deux entraînements, le dispositif de commande (14) comprenant un module de commande de virage (15) pour régler des vitesses d'entraînement différentes pour les au moins deux chenilles (2, 3) pour des trajets en virage en fonction d'un signal de direction d'un générateur de signal de direction, **caractérisé en ce que** le module de commande de virage (15) présente un module de commande de défaillance (18) pour commander un entraînement restant d'une chenille (2, 3) en cas de défaillance de l'entraînement de l'autre chenille (3, 2), le module de commande de défaillance (18) étant conçu pour commander l'entraînement restant fonctionnel en fonction de la vitesse réelle, détectée par le dispositif capteur (19), de la chenille (2, 3) dont l'entraînement est tombé en panne, et en fonction du signal de direction, de telle sorte que les chenilles (2, 3) présentent la vitesse différentielle respectivement nécessaire pour le signal de direction.

2. Véhicule à chenilles selon la revendication précédente, dans lequel le dispositif capteur (19) comprend des capteurs de vitesse de rotation (20) pour détecter la vitesse de rotation réelle d'un pignon à chaîne (4) de chacune des au moins deux chenilles (2, 3) et/ou la vitesse de rotation d'entrée des entraînements.

3. Véhicule à chenilles selon l'une quelconque des revendications précédentes, dans lequel les entraînements des au moins deux chenilles (2, 3) comportent chacun un moteur électrique d'entraînement (5), qui peuvent être actionnés chacun par un convertisseur (8) propre, lesdits convertisseurs (8) pouvant être actionnés individuellement par le module de commande de virage (15) et son module de commande de défaillance (18).

4. Véhicule à chenilles selon l'une quelconque des revendications précédentes, dans lequel le module de commande de virage (15) est conçu pour prendre en compte un signal de vitesse de déplacement d'un régulateur de vitesse de déplacement et/ou d'un module de commande de vitesse de déplacement (17) et pour actionner les convertisseurs (8) en fonction du signal de vitesse de déplacement en cas de fonctionnement des deux entraînements des deux chenilles (2, 3), tandis que le module de commande de défaillance est conçu pour ne pas tenir compte du signal de vitesse de déplacement pour l'actionnement du convertisseur (8) de l'entraînement resté fonctionnel en cas de défaillance de l'autre entraînement et pour tenir compte plutôt du signal de vitesse réelle du dispositif capteur (19).

5. Véhicule à chenilles selon l'une quelconques des revendications précédentes, dans lequel les entraînements (5) de la chenille (2, 3) peuvent être alimentés en énergie électrique par un générateur (10) qui peut être entraîné par un moteur à combustion interne (11), le module de commande de virage (15) et/ou le module de commande de défaillance (18) étant conçus pour, en cas de défaillance d'un entraînement, freiner l'entraînement restant fonctionnel si nécessaire et, pour cela, faire fonctionner l'entraînement fonctionnel en mode générateur, du courant réinjecté étant supporté sur le moteur à combustion interne (11) par l'intermédiaire d'une résistance de freinage (13) dans le circuit d'alimentation entre l'entraînement (5) et le générateur (10) et/ou par l'intermédiaire du générateur (10).

6. Véhicule à chenilles selon l'une quelconque des revendications précédentes, dans lequel les deux chenilles (2, 3) sont associées à un dispositif de freinage (22) comprenant un frein mécanique (23) pour chacune des chenilles (2, 3), les freins mécaniques (23) pouvant être actionnés par ledit module de commande de défaillance (18) en cas de défaillance d'un entraînement, en fonction des vitesses réelles mesurées des deux chenilles (2, 3) et en fonction du signal de direction.

7. Véhicule à chenilles avec au moins deux chenilles (2, 3) qui peuvent être entraînées par un entraînement central (5) par l'intermédiaire d'une transmission de direction à superposition (24) qui présente de préférence deux engrenages, en particulier des engrenages planétaires (26, 27) qui comprennent deux premiers éléments de transmission synchronisés entre eux, en particulier des roues solaires (28), qui peuvent être entraînés par l'entraînement central, en outre respectivement un deuxième élément de transmission relié en entraînement à un pignon à chaîne d'une des chenilles (2, 3), en particulier des porte-satellites, ainsi que des troisièmes éléments de transmission, en particulier des roues creuses, qui peuvent être entraînés en sens inverse par un entraînement de direction (33), un dispositif de commande étant prévu pour commander la vitesse d'entraînement de l'entraînement central (5) et présentant un module de commande de virage (15) pour actionner l'entraînement de direction (33) en fonction d'un signal de direction d'un générateur de signal de direction, un dispositif de freinage (29) avec respectivement un frein mécanique (23) étant prévu pour chacune des chenilles (2, 3), **caractérisé en ce que** le module de commande de virage (15) comprend un module de commande de défaillance (18) pour actionner le dispositif de freinage (29) en cas de défaillance de l'entraînement de direction (33) et/ou de défaillance d'un côté entraînement de la transmission de direction à superposition (24), ledit module de commande de défaillance (18) étant conçu pour actionner au moins l'un des freins mécaniques (23) en fonction de la vitesse réelle d'au moins l'une des deux chenilles (2, 3), détectée par un dispositif capteur (19), et en fonction du signal de direction, de telle sorte que les chenilles (2, 3) présentent les différentes vitesses réelles nécessaires pour le signal de direction.

8. Véhicule à chenilles selon la revendication précédente, dans lequel le module de commande de défaillance (18) est conçu pour actionner le frein mécanique (23) d'une chenille (2, 3) de telle sorte que les vitesses réelles détectées pour les deux chenilles (2, 3) correspondent l'une par rapport à l'autre au signal de direction.
